# EUROPÄISCHE PATENTSCHRIFT

(11) **EP 2 531 386 B1**
(45) Veröffentlichungstag und Bekanntmachung des Hinweises auf die Patenterteilung: **14.10.2015**
(21) Anmeldenummer: 11701751.7
(22) Anmeldetag: 21.01.2011
(51) Int. Cl.: B60T 11/236, F16J 15/20

(54) **DICHTUNG**
SEALING
JOINT

(30) Priorität: 05.02.2010 DE 102010006896
(43) Veröffentlichungstag der Anmeldung: 12.12.2012
(73) Patentinhaber: Robert Bosch GmbH, 70442 Stuttgart (DE)
(72) Erfinder: KANE, Brian, 97816 Lohr (DE); SHRIVE, Chris, Bridge of Allan FK9 4AU (GB); McMILLAN, Keith, Corstorphine Edinburgh (GB)
(74) Vertreter: Thürer, Andreas
(86) Internationale Anmeldenummer: PCT/EP2011/000236
(87) Internationale Veröffentlichungsnummer: WO 2011/095281

(56) Entgegenhaltungen:
- DE-A1- 4 423 043
- DE-A1-102005 030 189
- GB-A- 860 089
- US-A- 4 586 718

## Beschreibung

Die Erfindung betrifft eine Parkbremse mit einer Dichtung.

Bei Dichtungen kreiszylindrischer Dichtbereiche mit Dichtringen, die in eine umlaufende Nut entweder eines kreiszylindrischen Innenteils oder eines dazu relativ linear beweglichen Außenteils eingesetzt werden, gibt es verschiedene Ansätze.

Dabei sind geschlossene und offene Nuten bekannt, in denen ein Dichtring abschnittsweise aufgenommen und so fixiert wird. Geschlossene Nuten haben den Vorteil, dass ihr Fertigungsaufwand vergleichsweise gering ist, und den Nachteil, dass der Dichtring eine gewisse Elastizität aufweisen muss, um in die Nut einsetzbar zu sein. In offene Nuten können auch Dichtringe mit geringerer Elastizität und höherer Temperaturbeständigkeit eingesetzt werden. Nachteilig an derartigen Dichtungen ist, dass der Fertigungsaufwand der Nut höher ist, da sie nach dem Einsetzten des Dichtrings durch ein zusätzliches in axialer Richtung aufgeschobenes Teil seitlich geschlossen werden muss.

Weiterhin sind für temperaturbeständige Dichtungen auch zweiteilige Dichtringe bekannt, die einen Trägerring aus Stahl haben, in den eine Dichtung aus einem Elastomer eingesetzt ist. Der Trägerring muss wegen seiner geringen Elastizität in eine offene Nut eingesetzt werden, die von einem Haltering bzw. Sicherungsring seitlich geschlossen werden muss.

Die DE 10 2005 030 189 A1 zeigt einen Dichtring, der zwischen einem Gehäuse und einem darin beweglichen Kolben angeordnet ist. Dazu hat der Dichtring eine innere und eine äußere Dichtlippe. Die Befestigung des Dichtrings erfolgt über eine Befestigungslippe, die axial beabstandet von den beiden Dichtlippen ist.

Die DE 10 2005 030 189 A1 zeigt auch eine Dichtung zwischen einem Außenteil und einem zumindest abschnittsweise darin aufgenommenen kreiszylindrischen Innenteil, wobei die beiden Teile relativ zueinander linear bewegbar sind, und wobei an einem Innenumfang des Außenteils oder an einem Außenumfang des Innenteils eine umlaufende Nut ausgebildet ist, in die ein Nutabschnitt eines Dichtrings zumindest abschnittsweise eingesetzt ist, wobei der Dichtring einteilig ist.

Die GB 860,089 zeigt einen ähnlichen Dichtring mit einer inneren und einer äußeren Dichtlippe. Die Befestigung des Dichtrings erfolgt über einen radialen Vorsprung, die in eine radiale Nut des Außenteils eingesetzt ist. Die Nut wird dabei von zwei verschiedenen äußeren Bauteilen gebildet und ist daher offen.

In der DE 44 23 043 A1 ist ein Dichtring für eine rotierende Welle offenbart. Um die Reibung mit der Welle und die entsprechende Temperaturerhöhung des Dichtrings zu verringern, besteht dieser aus Teflon.

Dem gegenüber liegt der Erfindung die Aufgabe zu Grunde, eine Dichtung für linear bewegte Teile einer Parkbremse zu schaffen, die eine vergleichsweise hohe Temperaturbeständigkeit bei geringem vorrichtungstechnischem Aufwand bietet.

Diese Aufgabe wird gelöst durch eine Parkbremse mit einem Dichtring nach Patentanspruch 1.

Der erfindungsgemäße Dichtring ist zwischen einem Außenteil und einem zumindest abschnittsweise darin aufgenommenen kreiszylindrischen Innenteil angeordnet, wobei die beiden Teile relativ zueinander linear bewegbar sind. An einem Innenumfang des Außenteils oder an einem Außenumfang des Innenteils ist eine umlaufende Nut ausgebildet, in die der einteilige Dichtring abschnittsweise eingesetzt ist. Der Dichtring besteht aus einem hochtemperaturbeständigen thermoplastischen Kunststoff, und die Nut ist geschlossen. Der erfindungsgemäße Dichtring für linear bewegte Teile hat somit eine vergleichsweise hohe Temperaturbeständigkeit bei geringem vorrichtungstechnischem Aufwand, da der Dichtring einteilig ist und unmittelbar in die Nut eingesetzt werden kann, wobei die Nut nicht durch ein weiteres Teil seitlich geschlossen werden muss. Der Dichtring hat erfindungsgemäß einen Hauptabschnitt, an den der Nutabschnitt über einen etwa rohrförmigen elastischen Abschnitt angesetzt ist. Damit ist ein elastisches Zusammendrücken des Dichtrings zum Einführen seines Nutabschnitts in die Nut erleichtert.

Bei der erfindungsgemäßen Anwendung des Dichtrings ist das Außenteil ein Gehäuse einer selbsthemmenden Parkbremse und das Innenteil ein Bremskolben oder ein Teil eines Bremskolbens. Die Parkbremse ist über Beaufschlagung mit einem Druckmittel lösbar. Bei entlastetem Druckmittel ist der Bremskolben von einer Tellerfeder gegen ein Lamellenpaket gespannt. Dabei ist die hohe Temperaturbeständigkeit des Dichtrings von großem Nutzen, da bei einer Notbremsung durch Druckabfall in der Parkbremse von dem in unmittelbarer Nähe des Dichtrings angeordneten Lamellenpaket durch Reibung eine große Wärmemenge erzeugt wird.

Weitere vorteilhafte Ausgestaltungen der Erfindung sind in den abhängigen Patentansprüchen beschrieben.

Bei einer besonders bevorzugten Weiterbildung besteht der Dichtring aus Polyphenylensulfid. Damit können Druckmittel von höherer Temperatur (z.B. 180°C) von der Dichtung bzw. von dem Dichtring dauerhaft abgedichtet werden.

Bei einer besonders bevorzugten Weiterbildung der Dichtung ist die Nut am Innenumfang des Außenteils gebildet. Dabei ist eine elastische Anlage am Innenteil und gute Abdichtung gegeben, wenn der Dichtring einen Dichtabschnitt hat, dessen Innenmantel zwei konische Abschnitte hat, von denen eine Dichtlippe ausgebildet ist. Damit sind die Dichtungseigenschaften der erfindungsgemäßen Dichtung weiter verbessert.

Bei einer bevorzugten Weiterbildung der Dichtung haben der Nutabschnitt des Dichtrings und die Nut des Außenteils einen etwa rechteckigen Querschnitt, wobei ihr axiales Maß jeweils größer als ihr radiales Maß ist. Damit ist ein Einführen des Nutabschnitts in die Nut mit mäßigem Zusammendrücken des Dichtrings ermöglicht, und danach ist eine sichere Halterung des Dichtrings am Außenteil gegeben.

Es wird bevorzugt, wenn zwischen dem Gehäuse und dem Innenteil und zwischen dem Lamellenpaket und dem Hauptabschnitt ein Stützring angeordnet ist. Dieser stützt den Dichtring gegen den Druck des zum Lösen der Bremse genutzten Druckmittels.

Wenn der Stützring durch Glasfasern verstärkt ist, ist sein Temperatur-Ausdehnungskoeffizient geringer als der des Dichtrings.

Im Folgenden wird anhand der Figuren ein Ausführungsbeispiel der Erfindung detailliert beschrieben. Es zeigen:
Figur 1 ein erstes Ausführungsbeispiel einer erfindungsgemäßen Dichtung in einer Parkbremse in einer perspektivischen Schnitt-Darstellung;
Figur 2 einen Ausschnitt des Ausführungsbeispiels gemäß Figur 1 in einer Schnitt-Darstellung;
Figur 3 den Dichtring des Ausführungsbeispiels gemäß Figur 1 in einer perspektivischen Ansicht; und
Figur 4 ein zweites Ausführungsbeispiel einer erfindungsgemäßen Dichtung in einer Parkbremse in einer Schnitt-Darstellung.

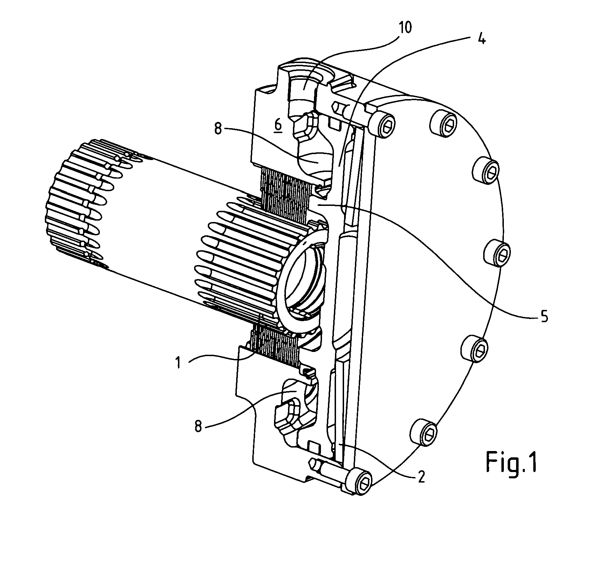

Figur 1 zeigt ein Ausführungsbeispiel einer erfindungsgemäßen Dichtung in einer selbsthemmenden Parkbremse im perspektivischen Schnitt. Die Parkbremse ist in einer Radnabe eines nicht gezeigten Baggers angeordnet und hat ein Lamellenpaket 1, das von einer Tellerfeder 2 über einen Bremskolben 4 (in Figur 1) nach links mit einer Anpresskraft beaufschlagt wird. Dabei liegt ein etwa rohrförmiger Anpressabschnitt 5 des Bremskolbens 4 an dem Lamellenpaket 1 an. Durch diese Anpresskraft sind die Lamellen des Lamellenpakets 1 in reibschlüssiger Verbindung mit einem Gehäuse 6, und die Parkbremse ist eingerückt bzw. aktiviert.

Im Gehäuse 6 ist ein Druckraum 8 vorgesehen, der über einen Kanal 10 mit Druckmittel beaufschlagt werden kann. Der Druckraum 8 ist ringförmig und im Wesentlichen konzentrisch zur Parkbremse ausgebildet, wobei er an seiner (in Figur 1) rechten Seite vom Bremskolben 4 begrenzt ist.

Zum Lösen der selbsthemmenden Parkbremse wird der Druckraum 8 über den Kanal 10 mit Druckmittel beaufschlagt, wodurch der Bremskolben 4 gegen die Kraft der Tellerfeder 2 (in Figur 1) nach rechts bewegt wird. Damit wird das Lamellenpaket 1 entlastet und die Bremse gelöst.

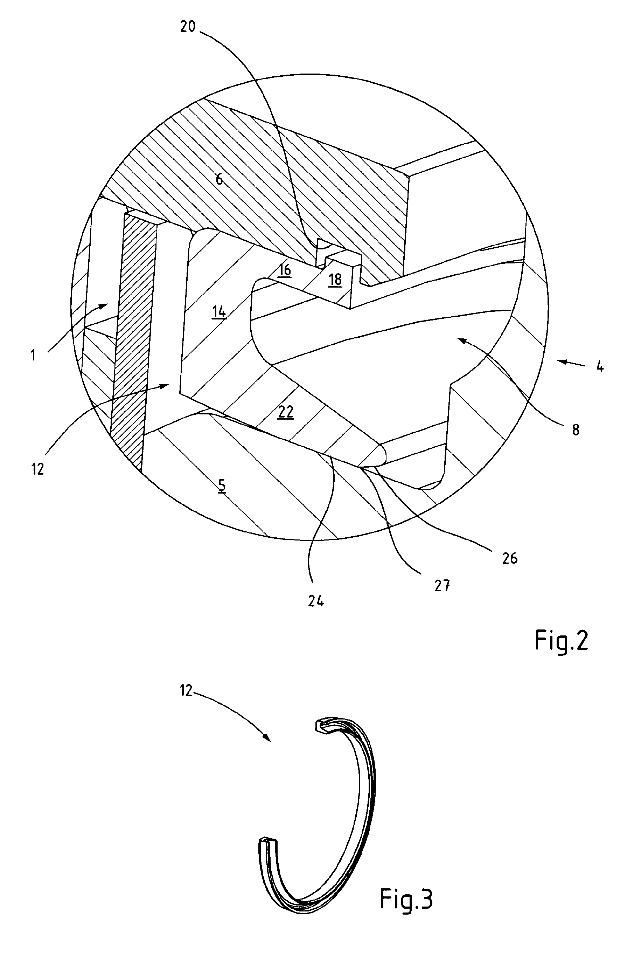

Figur 2 zeigt einen Ausschnitt des Ausführungsbeispiels gemäß Figur 1 mit einer erfindungsgemäßen Dichtung in einer Schnitt-Darstellung. Sie hat einen Dichtring 12, der einteilig aus hochtemperaturbeständigem thermoplastischen Kunststoff besteht. Er ist in einer radialen Ausnehmung des Gehäuses 6 angeordnet und liegt am Bremskolben 4 an. Dabei dichtet er den Druckraum 8 gegenüber der Umgebung ab.

Wie mit Bezug zur Figur 1 erläutert wurde, bewegt sich der Anpressabschnitt 5 des Bremskolbens 4 gemäß dem Doppelpfeil relativ zum Gehäuse 6 und zum Dichtring 12. Der Dichtring 12 hat einen im Wesentlichen ringförmigen Hauptabschnitt 14, an dem über einen etwa rohrförmigen elastischen Abschnitt 16 ein Nutabschnitt 18 befestigt ist. Dieser ist ringförmig ausgebildet und mit seinem äußeren Abschnitt in eine umlaufende Nut 20 des Gehäuses 6 eingesetzt. Die Nut 20 ist an einem Außenumfang der radialen Ausnehmung des Gehäuses 6 angeordnet.

Weiterhin hat der Dichtring 12 einen Dichtabschnitt 22, der ebenfalls am Hauptabschnitt 14 befestigt ist und an seiner dem Bremskolben 4 zugewandten Innenseite zwei konische Abschnitte 24, 26 hat. Diese sind zum Außenmantel des Anpressabschnitts 5 des Bremskolbens 4 schräg angestellt, so dass sich zwischen den konischen Abschnitten 24, 26 ein am Anpressabschnitt 5 anliegender Ring ergibt.

Bei der Montage des Dichtrings 12 wird sein Hauptabschnitt 14 in das Gehäuse 6 eingesetzt, wobei der Nutabschnitt 18 und der (in Figur 2) rechte Abschnitt des elastischen Abschnitts 16 im Durchmesser verringert werden, bis der Nutabschnitt 18 in der Nut 20 einrastet bzw. einschnappt. Dabei ist die Nut 20 erfindungsgemäß geschlossen, so dass kein zusätzliches Gehäuseteil zu ihrer Bildung benötigt wird.

Figur 3 zeigt den erfindungsgemäßen einstückigen Dichtring 12 in einer perspektivischen Ansicht.

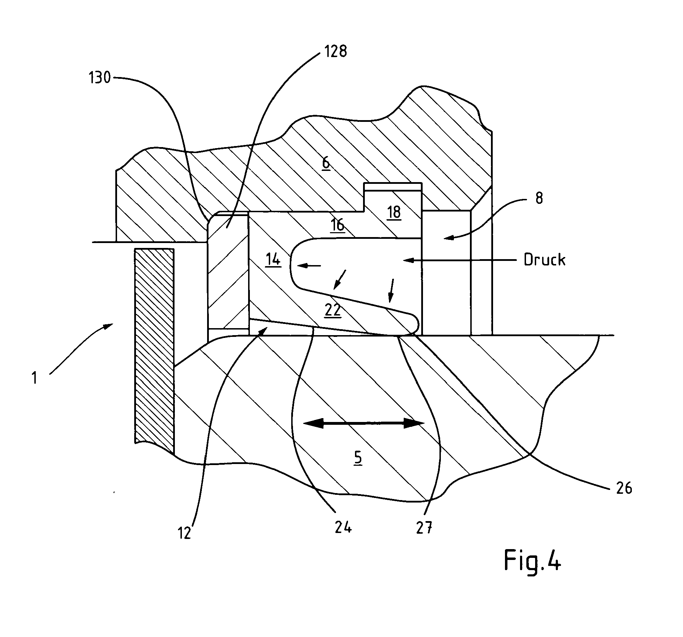

Figur 4 zeigt ein zweites Ausführungsbeispiel einer erfindungsgemäßen Dichtung einer Parkbremse in einer Schnitt-Darstellung. Dieses Ausführungsbeispiel hat einen zusätzlichen Stützring 128, der zwischen dem Gehäuse 6 und dem Anpressabschnitt 5 angeordnet ist. In Verschieberichtung des Anpressabschnitts 5 betrachtet ist der Stützring 128 zwischen dem Lamellenpaket 1 und dem Hauptabschnitt 14 des Dichtrings 12 angeordnet.

Der zusätzliche Stützring 128 ist durch Glasfasern verstärkt und dient zur mechanischen Unterstützung des Dichtrings 12 gegen den durch die Pfeile symbolisierten Druck des Druckraums 8. Die Unterstützung kann insbesondere nötig werden, wenn der Dichtring 12 auf 180°C erhitzt wurde. Der Stützring 128 zeigt dabei einen gegenüber dem Dichtring 12 verringerten Ausdehnungskoeffizienten.

Der Dichtring 12 liegt dazu mit seiner vom Druckraum 8 abgewanden Seite des Hauptabschnitts 14 am Stützring 128 an, der sich wiederum über einen verrundeten Bereich mit einer Außenabdichtung 130 am Gehäuse 6 abstützt.

Offenbart ist eine Dichtung, die zwischen einem Außenteil und einem zumindest abschnittsweise darin aufgenommenen kreiszylindrischen Innenteil angeordnet ist, wobei die beiden Teile relativ zueinander linear bewegbar sind. An einem Innenumfang des Außenteils oder an einem Außenumfang des Innenteils ist eine umlaufende Nut ausgebildet, in die ein Dichtring zumindest abschnittsweise eingesetzt ist. Dabei besteht der einteilige Dichtring aus einem hochtemperaturbeständigen thermoplastischen Kunststoff, und die Nut ist geschlossen.

### Bezugszeichenliste

- 1: Lamellenpaket
- 2: Tellerfeder
- 4: Bremskolben
- 5: Anpressabschnitt
- 6: Gehäuse
- 8: Druckraum
- 10: Kanal
- 12: Dichtring
- 14: Hauptabschnitt
- 16: elastischer Abschnitt
- 18: Nutabschnitt
- 20: Nut
- 22: Dichtabschnitt
- 24, 26: konischer Abschnitt
- 27: Dichtlippe
- 128: Stützring
- 130: Außenabdichtung

## Patentansprüche

1. Parkbremse, die durch Druckmittel lösbar ist, mit einem Außenteil (6), das ein Gehäuse ist, und mit einem kreiszylindrischen Innenteil (5), das ein Bremskolben ist oder an einem Bremskolben (4) befestigt ist, wobei der Bremskolben (4) von einer Tellerfeder (2) gegen ein Lamellenpaket (1) vorgespannt ist, und mit einem Dichtring (12) zwischen dem Außenteil (6) und dem zumindest abschnittsweise darin aufgenommenen Innenteil (5), wobei die beiden Teile (5, 6) relativ zueinander linear bewegbar sind, und wobei an einem Innenumfang des Außenteils (6) oder an einem Außenumfang des Innenteils (5) eine umlaufende geschlossene Nut (20) ausgebildet ist, in die ein Nutabschnitt (18) des Dichtrings (12) zumindest abschnittsweise eingesetzt ist, und wobei der Dichtring (12) einteilig ist und aus hochtemperaturbeständigem thermoplastischem Kunststoff besteht, und wobei der Dichtring (12) einen Hauptabschnitt (14) hat, an den der Nutabschnitt (18) über einen etwa rohrförmigen elastischen Abschnitt (16) angesetzt ist.

2. Parkbremse nach Patentanspruch 1, wobei der Dichtring (12) aus Polyphenylensulfid besteht.

3. Parkbremse nach einem der vorhergehenden Patentansprüche, wobei die Nut (20) am Innenumfang des Außenteils (6) gebildet ist, und wobei der Dichtring (12) einen Dichtabschnitt (22) hat, dessen Innenmantel zwei konische Abschnitte (24, 26) hat, zwischen denen eine Dichtlippe (27) ausgebildet ist.

4. Parkbremse nach einem der vorhergehenden Patentansprüche, wobei der der Nutabschnitt (18) und die Nut (20) einen etwa rechteckigen Querschnitt haben, und wobei ihr jeweiliges axiales Maß größer als ihr jeweiliges radiales Maß ist.

5. Parkbremse nach Patentanspruch 1, wobei zwischen dem Gehäuse (6) und dem Innenteil (5) und zwischen dem Lamellenpaket (1) und dem Hauptabschnitt (14) ein Stützring (128) angeordnet ist.

6. Parkbremse nach Patentanspruch 5, wobei der Stützring (128) durch Glasfasern verstärkt ist.

## Claims

1. Parking brake, which is releasable by pressure means, having an outer part (6) which is a housing, and having a circular cylindrical inner part (5) which is a brake piston or is fastened on a brake piston (4), wherein the brake piston (4) is prestressed against a plate stack (1) by a cup spring (2), and having a sealing ring (12) between the outer part (6) and the inner part (5), which is accommodated within said outer part at least in sections, wherein the two parts (5, 6) are movable in a linear manner in relation to each other, and wherein a circumferential closed groove (20), into which a groove portion (18) of the sealing ring (12) is inserted at least in sections, is realized on an inner circumference of the outer part (6) or on an outer circumference of the inner part (5), and wherein the sealing ring (12) is in one part and consists of high-temperature-resistant thermoplastic plastics material, and wherein the sealing ring (12) has a main portion (14), to which the groove portion (18) is attached by means of an approximately tubular elastic portion (16).

2. Parking brake according to Claim 1, wherein the sealing ring (12) consists of polyphenylene sulphide.

3. Parking brake according to one of the preceding claims, wherein the groove (20) is formed on the inner circumference of the outer part (6), and wherein the sealing ring (12) has a sealing portion (22), the inside surface of which has two conical portions (24, 26), between which a sealing lip (27) is realized.

4. Parking brake according to one of the preceding claims, wherein the groove portion (18) and the groove (20) have an approximately rectangular cross section and wherein their respective axial dimension is greater than their respective radial dimension.

5. Parking brake according to Claim 1, wherein a support ring (128) is arranged between the housing (6) and the inner part (5) and between the plate stack (1) and the main portion (14).

6. Parking brake according to Claim 5, wherein the support ring (128) is reinforced by glass fibres.

## Revendications

1. Frein de stationnement qui peut être relâché par un moyen de pression, avec une partie extérieure (6) qui est un boîtier et avec une partie intérieure (5) cylindrique circulaire qui est un piston de frein ou est fixée à un piston de frein (4), pour lequel le piston de frein (4) est préalablement tendu par un ressort diaphragme (2) contre un empilage de disques (1) et avec une bague d'étanchéité (12) entre la partie extérieure (6) et la partie intérieure (5) logée dedans au moins par section, pour lequel les deux parties (5, 6) sont linéairement mobiles l'une par rapport à l'autre et pour lequel une rainure (20) fermée périphérique est constituée sur une périphérie intérieure de la partie extérieure (6) ou sur une périphérie extérieure de la partie intérieure (5) dans laquelle est introduite au moins par section un section rainurée (18) de la bague d'étanchéité (12) et pour lequel la bague d'étanchéité (12) est en une seule partie et est en matière thermoplastique à haute résistance thermique et pour lequel la bague d'étanchéité (12) possède une section principale (14) sur laquelle est placée la section rainurée (18) sur une section (16) élastique à peu près de forme tubulaire.

2. Frein de stationnement selon la revendication 1 pour lequel la bague d'étanchéité (12) est en polysulfure de phénylène.

3. Frein de stationnement selon l'une quelconque des revendications précédentes pour lequel la rainure (20) est formée sur la périphérie intérieure de la partie extérieure (6) et pour lequel la bague d'étanchéité (12) possède une section étanche (22) dont l'enveloppe intérieure possède deux sections coniques (24, 26) entre lesquelles est constituée une lèvre d'étanchéité (27).

4. Frein de stationnement selon l'une quelconque des revendications précédentes pour lequel la section rainurée (18) et la rainure (20) ont une section à peu près rectangulaire et pour lequel leur dimension axiale respective est plus grande que leur dimension radiale respective.

5. Frein de stationnement selon la revendication 1 pour lequel une bague d'appui (128) est disposée entre le boîtier (6) et la partie intérieure (5) et entre l'empilage de disques (1) et la section principale (14).

6. Frein de stationnement selon la revendication 5 pour lequel la bague d'appui (128) est renforcée par des fibres de verre.
